# EUROPEAN PATENT SPECIFICATION

(11) **EP 1 983 723 B1**
(45) Date of publication and mention of the grant of the patent: **30.05.2012**
(21) Application number: 07106319.2
(22) Date of filing: 17.04.2007
(51) Int. Cl.: H04L 29/08, H04L 29/12

(54) **Method and central processing unit for managing peer-to-peer connections**
Verfahren und Zentraleinheit zum Verwalten von Peer-to-Peer-Verbindungen
Procédé et unité centrale de traitement pour la gestion de connexions de poste à poste

(43) Date of publication of application: 22.10.2008
(73) Proprietor: Vodafone Holding GmbH, 40213 Düsseldorf (DE)
(72) Inventor: Nelissen, Hans, 6226 DG Maastricht (NL)
(74) Representative: Müller, Thomas

(56) References cited:
- GB-A- 2 391 421
- US-A1- 2003 093 562

## Description

The present invention relates to a method and a central processing unit for managing peer-to-peer connections.

With increasing demand for flexibility in communication systems it is desirable to create a universal medium for information exchange by putting documents with computer-processable meaning (semantics) on universally accessible storing locations, such as the World Wide Web or Internet. Currently, standards, mark-up languages and related processing tools are being used for the semantic web. When a peer-to-peer connection between devices is to be established, standards that may be applicable to the World Wide Web do not apply.

In particular, personal area networks which are connected in a semantic peer-to-peer like web, hence, present the user with the problem of clearly identifying and addressing information. This problem is also known as the "me-you-dilemma". A person may store his personal content under a folder with the label "me", "I" or "mine". With more people being part of the personal area network or accessing the personal area network, such labels can not serve as a unique identifier.

In EP 1 645 974 A1 a self-organisation approach to semantic interoperability in a peer-to-peer information exchange is described. In this approach the semantic interoperability is provided by installing an agent on each peer device. The agent is enabled to develop a repertoire of grounded categories and labels, inspired from natural language. With this approach the identification of information within the organisation, i.e. the organizational structure, within a peer upon receipt of a request from a different peer is facilitated. This approach, however, does not address the problem of identifying the peer from which information is to be retrieved.

Another method for establishing Point-to-Point or Point-to-Multiple Points internet connection(s) is known from GB 2 391 421 A. According to this method, a point-to-point connection is established by a user contacting an IP server for obtaining an IP address. This IP address is then provided to an IP server X, where IP addresses are collected in a database. In the database, IP addresses for registered network users are maintained. The database includes a database search capability for users to locate a particular member user's IP address. One disadvantage of this method is that the IP addresses stored in the database have to be valid for any user. Hence, a user specific addressing of a request is not possible with the method described in this document.

Furthermore US 2003/0093562 A1 describes efficient peer to peer discovery. In this discovery method a network server is employed which manages and maintains a name-to-address resolution index. However, once again the names used for the resolution index are the same for every user.

The problem underlying the present invention is thus to provide a solution for enabling easy user specific access to information within a peer-to-peer based network.

According to a first aspect, the invention relates to a method for managing a peer-to-peer connection via a communication network, comprising at least one central processing unit for establishing a connection between peer devices, wherein the central processing unit receives a request from a requesting peer device. The method is characterized in that the central processing unit extracts addressing information from the request, further extracts information on the requesting peer device from the request, correlates the extracted addressing information to recipient peer device data, wherein the information on the requesting peer device is considered in the correlation of the addressing information to recipient peer device data, and in that the central processing unit delivers the received request to the recipient peer device indicated by the recipient peer device data.

A request according to the present invention may be a request to connect to another peer device. In addition, the request may specify content which is stored on another peer device and which is to be accessed via the peer-to-peer connection. The addressing information is information which is entered at the requesting peer device and describes the intended recipient. The description of the recipient may be a name, an abbreviation, a number etc. The description is chosen by the user of the requesting peer device. Therefore, the addressing information can be chosen according to the user's preferences. The addressing information may for example be "Dad", if the request is to be delivered to a peer device belonging or being used by the father of the user of the requesting device. As the addressing information indicates the relation of the user to the intended recipient, the addressing information will thus also be referred to as a relational address (MyRelADDR).

The recipient peer device data, in contrast, is data used to identify a device within the communication network. The recipient peer device data may for example be the IP-address of the device or a number identifying a user token used in the peer device or provided to the peer device. The user token may for example be the SIM card of a user.

The extraction of the addressing information from the request may be the reading of predefined fields or labels within the request. The addressing information itself may also be removed from the request.

The peer devices may be any electronic device which is capable of establishing a connection to a network unit of the communication network. In particular, the peer devices may be personal computers (PC), mobile phones etc. The peer-to-peer connection may also be established between peer devices of different nature. For example the peer-to-peer connection may be established between a mobile phone and a PC. The communication network according to the present invention may be a computer network, in particular the Internet. The communication network may, however, at least partially also comprise a telecommunication network, in particular a mobile or wireless communication network. The telecommunication network may be used as an access network for accessing the Internet. Alternatively, the telecommunication network may be the communication network over which the peer-to-peer connection is established.

By adding the step of correlating the received addressing information to recipient peer device data in the process of establishing a peer-to-peer connection, the addressing information provided by the requesting peer device does not have to be identical to the recipient peer device data. In addition, the addressing information does not even have to have the same format and comply with the standards used in the communication network, e.g. the internet protocol standard. This is an advantage for the user as the recipient peer device data for the intended recipient may not be available to the user of the requesting peer device. Instead, the user can establish a peer-to-peer connection by merely providing addressing information, such as a chosen name.

According to the invention, the central processing unit further extracts information on the requesting peer device from the request. The information on the requesting peer device is preferably identification information on the user of the requesting peer device. The identification information on the user may be information stored on a user token used in the requesting peer device. This token is preferably a SIM-card of the user. The information on the user may be indicated by a variable or parameter in the request called MySIM. The SIM card is inserted into peer devices such as mobile phones and the information stored thereon which clearly identifies the user will thus be available at the peer device. With peer devices such as a PC the identification information may also be provided by a SIM-card. In this case the information stored on the SIM-card may be transmitted to the PC by insertion of the card into the PC or via wire or wireless connection of a reader for the card to the PC. As peer devices may be used by different users, the provision of the identification information preferably relates to the current user of the peer device. As the peer device, in particular the mobile phone, will be operated by the user with the SIM-card belonging to the current user inserted therein, the identification information of the current user will be easily available for the inventive method.

By making information on the requesting peer device and in particular on the user of the requesting peer device, available at the central processing unit, the correlation of addressing information to recipient peer device data can be made user specific. This means, that for one user addressing information may be correlated to different recipient peer device data than for a different user. Also different addressing information, for example labels, may be defined by different users.

The central processing unit preferably accesses a database for retrieving the recipient peer device data correlating to the extracted addressing information. The database may be connected to the central processing unit, i.e. may be a separate entity. Alternatively, the database may be included within the central processing unit. The handling of the received request at the central processing unit is hence not a mere transcription or transmission of addressing information, but additional data and/or information can be taken into consideration. By accessing a central database for looking up correlations of addressing information and recipient peer device data, changes made to the data and/or information in the database will be applied to the handling of subsequent requests automatically.

The central processing unit may add indicia of the source of the request to the request before transmission to the recipient. These indicia may serve to identify the origin of the request once it has been received at the recipient peer device. Such identification of origin may provide additional security to the transmission, as the recipient may define sources from which requests are to be accepted and/or from which are to be rejected.

The indicia may relate to the requesting peer device. In this case the indicia may be derived from a database at the central processing unit. For example, the information on the requesting peer device, e.g. the SIM-card number of the user of the requesting device, may be used. This information is preferably linked in the database to the name of the user. The indicia of the source of the request, which is transmitted with the request to the receiving peer device, may thus be the name of the user issuing the request. Alternatively, the indicia may relate to the central processing unit. In particular, the database from which data and information is being retrieved for the correlation, may be indicated. Alternatively, a group of users may be defined within the database and this group may be used as indicia of the source of the request. The group may for example be defined to be "family". Such a definition of a group may be given by a user, when entering his relational information, i.e. the labels and assigned recipient peer device data into the database. The group may be defined such that all users relating to labels or addressing information, which are stored for a specific user, are considered to be a group.

The information on the requesting peer device, in particular the information on the user of the peer device, is preferably inserted into the request by the requesting peer device. In a preferred embodiment the information on the user of the peer device is automatically included in the request. The information may be included within the request or may be added to it, e.g. included in a header or other fields wrapped around the request. By adding the information on the requesting peer device by the requesting peer device, no user action is necessary to provide this additional information.

Addressing information may be defined at the requesting peer device, preferably defined by the user of the requesting peer device. It is, however, also possible that the addressing information is defined by the user of the requesting peer device at the central processing unit or a different network unit. For this purpose an interface for accessing the central processing unit or the other network unit may be provided. The definition of the addressing information may be the provision of a link from a name to a different name. For example, the addressing information may be "Dad" and may be linked to "John Smith". Further details, such as address, telephone number and so on may be provided to make the definition of the addressing information unique. If this link is defined at network level, e.g. the central processing unit, additional information available on the network, can be used. For example, external databases may be accessed. Such an external database may be the database of a telecommunication network, where correlations of SIM-card numbers to names are available.

According to a further aspect, the present invention relates to a central processing unit for managing peer-to-peer connections between peer devices. The central processing unit is characterized in that the central processing unit comprises an extraction unit for extracting at least addressing information from a request received from a requesting peer device and a correlation unit for correlating the extracted addressing information to recipient peer device data, wherein the correlation unit comprises a database containing entries on addressing information and recipient peer device data, wherein addressing information is linked to the recipient peer device data based on information on the requesting peer device, and in that the central processing unit comprises a transmission unit for transmitting at least the received request according to the recipient peer device data obtained at the correlation unit. The central processing unit is further characterized in that the central processing unit extracts information on the requesting peer device from the request and the information on the requesting peer device is considered in the correlation of the addressing information to recipient peer device data.

By provisioning a correlation unit, a management unit for managing peer-to-peer connections between peer devices and in particular for routing requests to intended recipients is superimposed to the peer-to-peer connection. This unit will centrally manage input from a requesting peer device and transmit the requests from the requesting peer device to the intended recipient peer device.

The correlation unit comprises or is connected to a database containing entries on addressing information and recipient peer device data. By correlating information and data based on entries of a central database, the information and data as well as the correlation between the information and the data can be updated centrally and can then be used for various transmissions. In addition, by providing the database at the network level, information from other network units can be obtained when correlating information to data or when adding entries to the database. With the centrally stored entries of the database, it is also possible to use the entries for purposes going beyond the mere correlation of information data and recipient peer device data. For example, the database entries may be used to generate indicia of the source of a request. These indicia may be the name of the requesting user, which can be obtained from the database based on the information on the requesting device, e.g. the SIM-card number, received at the central processing unit with the original request.

The addressing information is linked to the recipient peer device data in the database sorted by information on requesting peer devices. By this sorting or grouping of database entries, access to the link between addressing information and recipient peer device data relevant for different users can be provided easily from one single database.

Even though the invention is described by referring to one peer device as a requesting peer device and one peer device as a recipient peer device, it is to be noted that also the recipient peer device can serve as a requesting peer device and vice versa. This notation is only adhered to in this specification for sake of clarity.

Features and advantages which are described with reference to the inventive method also apply to the inventive central processing unit and vice versa.

The present invention will now be described in detail with reference to the attached figures, wherein:
Figure 1 shows a schematic view of a peer-to-peer system; and
Figure 2 shows a schematic depiction of database entries.

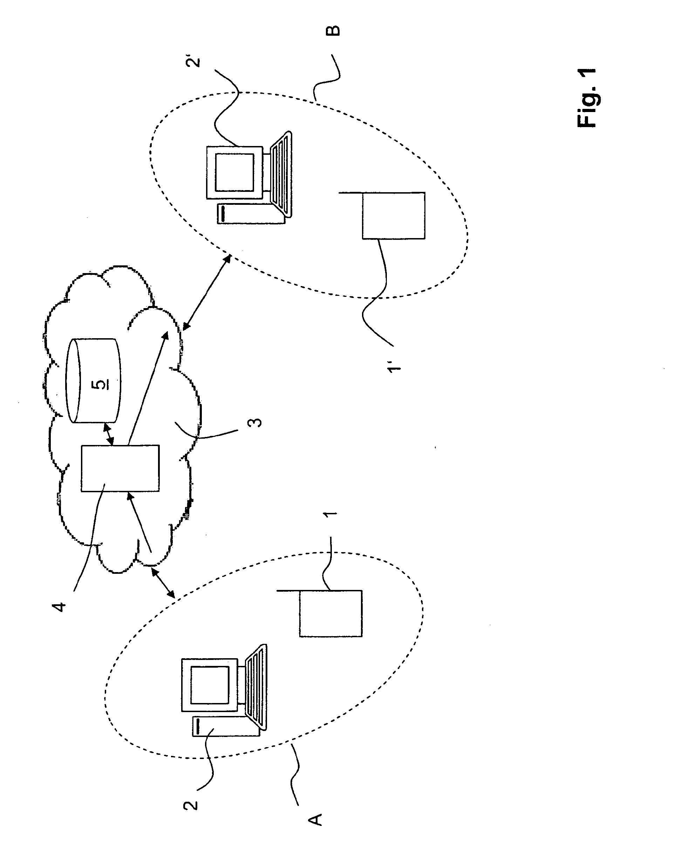

In Figure 1 peer devices 1 and 2 of a user A are depicted schematically. In particular a mobile phone 1 and a personal computer PC 2 are shown. Also peer devices, i.e. a mobile phone 1' and a PC 2', of a user B are shown. For clarity sake, the invention will be described hereinafter with user A requesting content and user B being the intended recipient of the request. It is, however, apparent that a respective request could also be issued from user B accordingly. Furthermore, the invention will be described with the peer device being the mobile phone 1, 1' of the users A and B. The connection could, however, also be established between the PCs 2, 2' of user A and B or between the mobile phone 1 of user A and the PC 2' of user B or between the PC 2 of user A and the mobile phone 1' of user B. Also other peer devices (not shown) could be used.

A communication connection between the mobile phone 1 and the mobile phone 1' will be established via the communication network 3, which may be the Internet. The access to the communication network 3 can be provided by suitable access networks, such as mobile communication networks.

When user A wants to access content stored on the mobile phone 1' of user B, he will generate a request. This request may be generated by selecting an option from within a file or content manager, such as a local browser. Alternatively, the request may be generated by manual input of the user.

When the mobile phone 1 determines that the content which is to be accessed is not stored on the mobile phone 1, it will transmit the request to a central processing unit 4 on the network 3. The central processing unit 4 will process the request and will transmit the request to the intended recipient, i.e. to the peer device 1', where the desired content is stored.

On the mobile phone 1 of user A the content may be organized in folders. These folders may be labelled "mine", "Dad", "Sister", "Joe", etc. The folder "mine" will contain content, which is stored on the mobile phone 1 of user A. The content of the folders "Dad", "Sister", etc. will not be available at the mobile phone 1 but will be stored at a peer device of the respective person.

If user A selects to access one of these folders, which may also be referred to as remote folders or remote content, the mobile device 1 will issue a request to access the folder or the content. The request which is generated at the mobile phone 1 of user A will include an indication of the intended recipient of the request. This indication may also be referred to as MyRelADDR. The mobile device 1 will also transmit information on the mobile device 1 of user A. This information will for example be the SIM card number of the SIM card in the mobile phone 1. This information together with or included in the request is being transmitted to the central processing unit 4. The request may thus be represented by REQ (MySIM; MyRelADDR). In this request MySIM is the information on the user A and MyRelADDR is the label used by the user A, e.g. "Dad", to describe the intended recipient. As the label "Dad" is not a label according to the network standards, according to which the communication network 3 works, the central processing unit 4 will identify this request.

As the request generated at the mobile device 1 by user A does not include recipient peer device data such as the SIM-card number or the IP-address, the central processing unit 4 will detect the addressing information included in the request instead. This addressing information, e.g. "Dad", will be extracted from the request. In addition, information on the mobile phone 1, in particular the SIM-card number of user A will be extracted from the request.

With this extracted information, i.e. addressing information and information on the requesting peer device, being available, a database 5 connected to or included in the central processing unit 4 will be accessed.

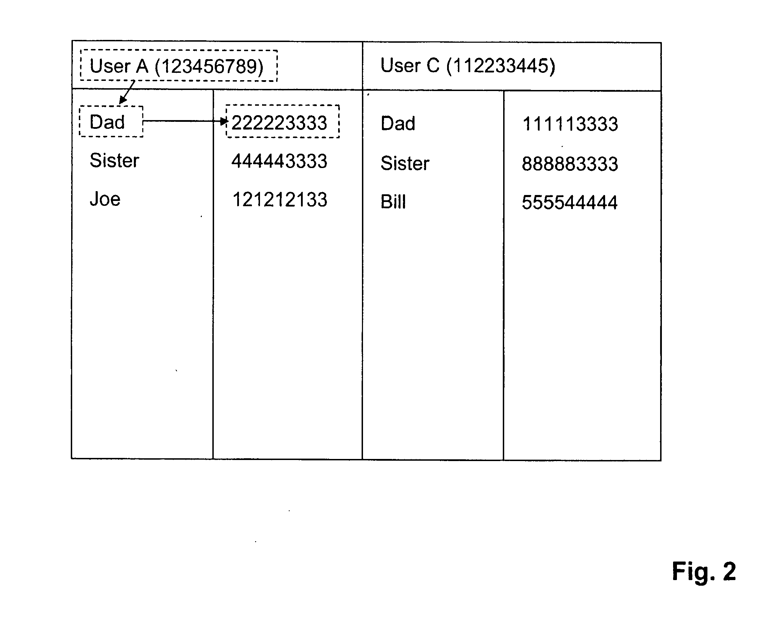

The entries of the database are schematically depicted in Figure 2.

User A may be indication in the database by his name and SIM-card number. For user A several labels or addressing information is stored. Each label correlates the addressing information (Dad, Sister, etc.) is associated or linked with the respective recipient peer device data, e.g. IP address or SIM number. Also entries for a user C are shown in Figure 2. These entries assign addressing information to the respective recipient peer device data.

Based on to the information on the requesting peer device, the central processing unit 4 will look up the recipient peer data for the addressing information extracted from the request. If the addressing information was "Dad" and the request was sent from user A, the database 5 will return the IP address 2222223333 to the central processing unit 4. With this data, the request can be transmitted to the recipient device. For example, if user B is the dad of user A, the request will be transmitted to his peer device 1', 2'. A request from a different user C addressed to "Dad" will be transmitted to a different peer device, as the relational address information "Dad" is correlated to a different peer device for user C.

At the central processing unit 4 the information on the requesting peer device will be transmitted together with the request. This information can be used at the recipient peer device for security purposes. At the recipient peer device there may be settings to only allow requests from specific senders.

With the present invention it will thus become possible to facilitate the establishing of a peer-to-peer connection between peer devices. The present invention provides increased security in peer-to-peer communication and provides a community of people, such as a family or circle of friends, with an easy solution to obtain information from people they trust, to share personal content in a trusted manner.

## Claims

1. Method for managing a peer-to-peer connection via a communication network (3), comprising at least one central processing unit (4) for establishing a connection between peer devices (1, 1', 2, 2'), wherein the central processing unit (4) receives a request from a requesting peer device (1, 1', 2, 2') and extracts addressing information from the request, **characterized in that** the central processing unit (4) further extracts information on the requesting peer device (1, 1', 2, 2') from the request, correlates the extracted addressing information to recipient peer device data, wherein the information on the requesting peer device is considered in the correlation of the addressing information to recipient peer device data, and **in that** the central processing unit (4) delivers the received request to the recipient peer device indicated by the recipient peer device data.

2. Method according to claim 1, **characterized in that** the information on the requesting peer device (1, 1', 2, 2') is identification information on the user of the requesting peer device.

3. Method according to claim 2, **characterized in that** the information on the requesting peer device (1, 1', 2, 2') is identification information on the current user of the requesting peer device.

4. Method according to claim 1 to 3, **characterized in that** the central processing unit (4) accesses a database (5) for retrieving the recipient peer device data correlating to the extracted addressing information.

5. Method according to anyone of claims 1 to 4, **characterized in that** the central processing unit (4) adds indicia of the source of the request to the request before transmission to the recipient.

6. Method according to claim 5, **characterized in that** the indicia relates to the requesting peer device (1, 1', 2, 2') and/or to the central processing unit (4).

7. Method according to anyone of claims 1 to 6, **characterized in that** the information on the requesting peer device is inserted into the request by the requesting peer device (1, 1', 2, 2').

8. Method according to anyone of claims 1 to 7, **characterized in that** addressing information is defined at the requesting peer device (1, 1', 2, 2').

9. Central processing unit for managing peer-to-peer connections between peer devices (1, 1', 2, 2'), comprising an extraction unit for extracting at least addressing information from a request received from a requesting peer device (1, 1', 2, 2') and **characterized in that** the central processing unit (4) comprises a correlation unit for correlating the extracted addressing information to recipient peer device data, wherein the correlation unit comprises a database (5) containing entries on addressing information and recipient peer device data, wherein addressing information is linked to the recipient peer device data based on information on requesting peer devices, **in that** the central processing unit (4) comprises a transmission unit for transmitting at least the received request according to the recipient peer device data obtained from the correlation unit, and **in that** the central processing unit (4) is adapted to extract information on the requesting peer device (1, 1', 2, 2') from the request and the information on the requesting peer device (1, 1', 2, 2') is considered in the correlation of the addressing information to recipient peer device data.

## Patentansprüche

1. Verfahren zum Verwalten einer Peer-to-Peer-Verbindung über ein Kommunikationsnetzwerk (3), umfassend zumindest eine zentrale Verarbeitungseinheit (4) zur Herstellung einer Verbindung zwischen Peer-Geräten (1, 1', 2, 2'), wobei die zentrale Verarbeitungseinheit (4) eine Anfrage von einem anfragenden Peer-Gerät (1, 1', 2, 2') empfängt und Adressierinformationen aus der Anfrage extrahiert, **dadurch gekennzeichnet, dass** die zentrale Verarbeitungseinheit (4) weiterhin Informationen über das anfragende Peer-Gerät (1, 1', 2, 2') aus der Anfrage extrahiert, die extrahierten Adressierinformationen zu Empfänger-Peer-Gerät-Daten korreliert, wobei die Informationen über das anfragende Peer-Gerät in der Korrelation der Adressierinformationen zu den Empfänger-Peer-Gerät-Daten berücksichtigt werden, und dass die zentrale Verarbeitungseinheit (4) die empfangene Anfrage an das Empfänger-Peer-Gerät, das durch die Empfänger-Peer-Gerät-Daten angegeben ist, liefert.

2. Verfahren gemäß Anspruch 1, **dadurch gekennzeichnet, dass** die Informationen über das anfragende Peer-Gerät (1, 1', 2, 2') Identifikationsinformationen des Nutzers des anfragenden Peer-Gerätes sind.

3. Verfahren gemäß Anspruch 2, **dadurch gekennzeichnet, dass** die Informationen über das anfragende Peer-Gerät (1, 1', 2, 2') Identifikationsinformationen des derzeitigen Nutzers des anfragenden Peer-Gerätes sind.

4. Verfahren nach einem der Ansprüche 1 bis 3, **dadurch gekennzeichnet, dass** die zentrale Verarbeitungseinheit (4) auf eine Datenbank (5) zugreift, um die Empfänger-Peer-Gerät-Daten, die mit den extrahierten Adressierinformationen korrelieren, abzurufen.

5. Verfahren gemäß einem der Ansprüche 1 bis 4, **dadurch gekennzeichnet, dass** die zentrale Verarbeitungseinheit (4) einen Vermerk der Quelle der Anfrage zu der Anfrage vor der Übermittlung an den Empfänger hinzufügt.

6. Verfahren gemäß Anspruch 5, **dadurch gekennzeichnet, dass** der Vermerk das anfragende Peer-Gerät (1, 1', 2, 2') und/oder die zentrale Verarbeitungseinheit (4) betrifft.

7. Verfahren gemäß einem der Ansprüche 1 bis 6, **dadurch gekennzeichnet, dass** die Informationen über das anfragende Peer-Gerät durch das anfragende Peer-Gerät (1, 1', 2, 2') in die Anfrage eingefügt werden.

8. Verfahren gemäß einem der Ansprüche 1 bis 7, **dadurch gekennzeichnet, dass** die Adressierinformationen an dem anfragenden Peer-Gerät (1, 1', 2, 2') definiert werden.

9. Zentrale Verarbeitungseinheit zur Verwaltung von Peer-to-Peer-Verbindungen zwischen Peer-Geräten (1, 1', 2, 2') umfassend eine Extrahiereinheit zum Extrahieren von zumindest Adressierinformationen aus einer Anfrage, die von einem anfragenden Peer-Gerät (1, 1', 2, 2') erhalten wurde, und **dadurch gekennzeichnet, dass** die zentrale Verarbeitungseinheit (4) eine Korrelationseinheit zum Korrelieren der extrahierten Adressierinformationen zu Empfänger-Peer-Gerät-Daten umfasst, wobei die Korrelationseinheit eine Datenbank (5) umfasst, die Einträge über Adressierinformationen und Empfänger-Peer-Gerät-Daten enthält, wobei Adressierinformationen zu den Empfänger-Peer-Gerät-Daten basierend auf Informationen über das anfragende Peer-Gerät verknüpft sind, dass die zentrale Verarbeitungseinheit (4) eine Übermittlungseinheit zum Übermitteln von zumindest der empfangenen Anfrage entsprechend den Empfänger-Peer-Gerät-Daten, die von der Korrelationseinheit erhalten wurden, umfasst, und dass die zentrale Verarbeitungseinheit (4) ausgelegt ist, um Informationen über das anfragende Peer-Gerät (1, 1', 2, 2') aus der Anfrage zu extrahieren und die Informationen über das anfragende Peer-Gerät (1, 1', 2, 2') bei der Korrelierung der Adressierinformationen zu Empfänger-Peer-Gerät-Daten berücksichtigt werden.

## Revendications

1. Procédé de gestion d'une connexion de terminal à terminal par l'intermédiaire d'un réseau de communication (3), comprenant au moins une unité centrale de traitement (4) destinée à établir une connexion entre des dispositifs terminaux (1, 1', 2, 2'), dans lequel l'unité centrale de traitement (4) reçoit une demande à partir d'un dispositif terminal demandeur (1, 1', 2, 2') et extrait des informations d'adressage à partir de la demande, **caractérisé en ce que** l'unité centrale de traitement (4) extrait, en outre, des informations sur le dispositif terminal demandeur (1, 1', 2, 2') à partir de la demande, réalise une corrélation des informations d'adressage extraites avec les données de dispositif terminal receveur, dans lequel les informations sur le dispositif terminal demandeur sont considérées lors de la corrélation des informations d'adressage avec les données de dispositif terminal receveur, et **en ce que** l'unité centrale de traitement (4) délivre la demande reçue au dispositif terminal receveur indiqué par les données de dispositif terminal receveur.

2. Procédé selon la revendication 1, **caractérisé en ce que** les informations sur le dispositif terminal demandeur (1, 1', 2, 2') sont des informations d'identification sur l'utilisateur du dispositif terminal demandeur.

3. Procédé selon la revendication 2, **caractérisé en ce que** les informations sur le dispositif terminal demandeur (1, 1', 2, 2') sont des informations d'identification sur l'utilisateur courant du dispositif terminal demandeur.

4. Procédé selon les revendications 1 à 3, **caractérisé en ce que** l'unité centrale de traitement (4) accède à une base de données (5) afin d'extraire les données de dispositif terminal receveur corrélées aux informations d'adressage extraite.

5. Procédé selon l'une quelconque des revendications 1 à 4, **caractérisé en ce que** l'unité centrale de traitement (4) ajoute des index de la source de la demande à la demande avant transmission au receveur.

6. Procédé selon la revendication 5, **caractérisé en ce que** les index se rapportent au dispositif terminal demandeur (1,1', 2, 2') et/ou à l'unité centrale de traitement (4).

7. Procédé selon l'une quelconque des revendications 1 à 6, **caractérisé en ce que** les informations sur le dispositif terminal demandeur sont insérées dans la demande par le dispositif terminal demandeur (1, 1', 2, 2').

8. Procédé selon l'une quelconque des revendications 1 à 7, **caractérisé en ce que** les informations d'adressage sont définies au niveau du dispositif terminal demandeur (1, 1', 2, 2').

9. Unité centrale de traitement destiné à gérer des connexions de terminal à terminal entre des dispositifs terminaux (1, 1', 2, 2'), comprenant une unité d'extraction destinée à extraire au moins des informations d'adressage à partir d'une demande reçue d'un dispositif terminal demandeur (1, 1', 2, 2') et **caractérisée en ce que** l'unité centrale de traitement (4) comprend une unité de corrélation destinée à corréler les informations d'adressage extraites à des données de dispositif terminal receveur, dans laquelle l'unité de corrélation comprend une base de données (5) contenant des entrées sur des informations d'adressage et des données de dispositif terminal receveur, dans laquelle les informations d'adressage sont liées aux données de dispositif terminal receveur sur la base d'informations sur des dispositifs terminaux receveurs, **en ce que** l'unité centrale de traitement (4) comprend une unité de transmission destinée à transmettre au moins la demande reçue en fonction des données de dispositif terminal receveur obtenues à partir de l'unité de corrélation, et **en ce que** l'unité centrale de traitement (4) est adaptée afin d'extraire des informations sur le dispositif terminal demandeur (1, 1', 2, 2') à partir de la demande et les informations sur le dispositif terminal demandeur (1, 1', 2, 2') sont considérées lors de la corrélation des informations d'adressage avec les données de dispositif terminal receveur.
